# EUROPEAN PATENT APPLICATION

(11) **EP 4 772 263 A1**
(43) Date of publication of application: **08.07.2026**
(21) Application number: 25215896.9
(22) Date of filing: 14.11.2025
(51) Int. Cl.: B01D 53/04

(54) **DIRECT AIR CAPTURE SORBENT SYSTEM**

(30) Priority: 26.11.2024 US 202418960132
(71) Applicant: Robert Bosch GmbH, 70442 Stuttgart (DE)
(72) Inventor: Nolte, Philipp, 70839 Gerlingen (DE); Kitchaev, Daniil, Somerville, Massachusetts 02144 (US); Mock, Ulrike, 75177 Pforzheim (DE); Gorlin, Yelena, Menlo Park, California 94025 (US); Bauer, Harald, 71139 Ehningen (DE); Schmidt, Helmut, 74321 Bietigheim-Bissingen (DE)

(57) **Abstract**

A direct air capture CO₂ system includes a CO₂ extraction reactor having a chamber defined by a wall; an air inlet formed in the wall; an air outlet formed in the wall; and housing units defining internal volumes, the housing units arranged within the chamber, at least some of the housing units having spherical and/or ellipsoidal shapes, each of the internal volumes at least partially filled with functionalized CO₂ sorbent particles.

## Description

### TECHNICAL FIELD

The present disclosure relates to a system for capture of atmospheric carbon dioxide (CO₂) having fillable, trackable sorbent housing units.

### BACKGROUND

Carbon dioxide is a notorious greenhouse gas whose emissions have been sharply on the rise since the Industrial Revolution began in the 18^{th} century. Since then, the CO₂ emissions have been a confirmed culprit in the climate change around the world. Recent findings of the International Panel on Climate Change have proposed that the CO₂ emissions should be halved by 2030 to avoid further negative impact on the planet. Various technologies have been developed to capture atmospheric CO₂, but their drawbacks prevent realization of more widespread CO₂ sequestration from air.

### SUMMARY

In one embodiment, a direct air capture CO₂ system is disclosed. The system may include a CO₂ extraction reactor having a chamber defined by a wall; an air inlet formed in the wall; an air outlet formed in the wall; and housing units defining internal volumes, the housing units arranged within the chamber, at least some of the housing units having spherical and/or ellipsoidal shapes, each of the internal volumes at least partially filled with functionalized CO₂ sorbent particles. At least some of the housing units may include a first air-impermeable material and a second air-permeable material. The second air-permeable material may form a membrane. A thickness of the second air-permeable material may be smaller than a thickness of the first air-impermeable material. At least some of the housing units may include air-impermeable spacers located between the functionalized CO₂ sorbent particles. The spacers may have a smaller diameter than the sorbent particles. At least some of the housing units include walls forming openings. The housing units may differ in size.

In another embodiment, a CO₂ direct air capture sorbent housing unit is disclosed. The housing unit may include an enclosable cell having a wall defining an internal volume and having a circular cross-section, the enclosable cell including functionalized CO₂ sorbent particles within the internal volume, the enclosable cell having an air-impermeable portion and an air-permeable portion configured for entry and egress of air. The enclosable cell may be a sphere. The internal volume of the enclosable cell may be about 0.01-1 liter. The air-impermeable portion may include metal. The air-permeable portion may include a fabric. The air-impermeable portion may have a greater thickness than the air-permeable portion. The air-permeable portion may include openings.

In yet another embodiment, a direct air capture CO₂ system is disclosed. The system may include a reaction reactor at least partially filled with replaceable sorbent housing units having spherical and/or ellipsoidal shapes, each housing unit having an internal volume filled with replaceable functionalized CO₂ sorbent particles. At least 60 % of a total internal volume of each housing unit may be filled with the replaceable functionalized CO₂ sorbent particles. At least some of the sorbent housing units may include a first air-impermeable material and a second air-permeable material. The second air-permeable material may form a membrane. The sorbent housing units may be in physical contact with one another.

### BRIEF DESCRIPTION OF THE DRAWINGS

Figure 1 is a schematic depiction of a direct-air-capture (DAC) system with CO₂ sorption into a solid sorbent and sorbent regeneration;
Figure 2 shows a schematic depiction of a non-limiting example DAC system according to one or more embodiments disclosed herein;
Figures 3A - 3D show various non-limiting examples of sorbent housing units according to one or more embodiments disclosed herein;
Figure 4 shows a cross-sectional view of a non-limiting example sorbent housing unit according to one or more embodiments disclosed herein;
Figure 5 shows a cross-sectional view of a non-limiting example sorbent housing unit having thermal management devices according to one or more embodiments disclosed herein;
Figures 6A - 6D show non-limiting examples of spherical, ellipsoidal, and toroidal sorbent housing units according to one or more embodiments disclosed herein;
Figures 7A - 7D show cross-sectional view of non-limiting example spherical sorbent housing units having different wall thicknesses according to one or more embodiments disclosed herein;
Figures 8A - 8E show non-limiting example reaction reactors with various arrangement and/or alignment of sorbent housing bodies and additional features according to one or more embodiments disclosed herein;
Figures 8F - 8H show non-limiting examples of sorbent housing units having a plurality of thermal management elements according to one or more embodiments disclosed herein;
Figure 9A shows a non-limiting example reaction reactor with a circular cross-section having a plurality of spherical and ellipsoidal sorbent housing units and air-nonpermeable spacers in the reactor's internal volume according to one or more embodiments disclosed herein;
Figure 9B shows a non-limiting example reactor with a non-circular cross-section having a plurality of spherical sorbent housing units according to one or more embodiments disclosed herein;
Figure 10 shows a schematic depiction of a non-limiting example DAC reaction reactor including a number of sensors, a controller, and a bus system; and
Figure 11 shows a schematic depiction of a non-limiting example sorbent housing unit with closable shutters, a bus system, a controller, and sensors in two states.

### DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reaction and/or use are to be understood as modified by the word "about" in describing the broadest scope of the disclosure. Practice within the numerical limits stated is generally preferred. Also, unless expressly stated to the contrary: percent, "parts of," and ratio values are by weight; the description of a group or class of materials as suitable or preferred for a given purpose in connection with the disclosure implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed. Unless stated otherwise, the wt.% is based on the total weight of the substrate and the vol.% is based on the total volume of the substrate.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. Generally, the term "about" denoting a certain value is intended to denote a range within +/- 5% of the value. As one example, the phrase "about 100" denotes a range of 100+/- *5, i.e.* the range from 95 to 105. Generally, when the term "about" is used, it can be expected that similar results or effects according to the disclosure can be obtained within a range of +/- 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4, ..., 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits. Similarly, whenever listing integers are provided herein, it should also be appreciated that the listing of integers explicitly includes ranges of any two integers within the listing.

In the examples set forth herein, concentrations, temperature, and reaction conditions *(e.g.,* pressure, pH, flow rates, *etc*.) can be practiced with plus or minus 50 percent of the values indicated rounded to or truncated to two significant figures of the value provided in the examples. In a refinement, concentrations, temperature, and reaction conditions (*e.g*., pressure, pH, flow rates, *etc*.) can be practiced with plus or minus 30 percent of the values indicated rounded to or truncated to two significant figures of the value provided in the examples. In another refinement, concentrations, temperature, and reaction conditions (*e.g.,* pressure, pH, flow rates, *etc*.) can be practiced with plus or minus 10 percent of the values indicated rounded to or truncated to two significant figures of the value provided in the examples.

As used herein, the term "and/or" means that either all or only one of the elements of said group may be present. For example, "A and/or B" means "only A, or only B, or both A and B". In the case of "only A," the term also covers the possibility that B is absent, *i.e.* "only A, but not B".

It is also to be understood that this disclosure is not limited to the specific embodiments and methods described below, as specific components and/or conditions may, of course, vary. Furthermore, the terminology used herein is used only for the purpose of describing particular embodiments of the present disclosure and is not intended to be limiting in any way.

The term "comprising" is synonymous with "including," "having," "containing," or "characterized by." These terms are inclusive and open-ended and do not exclude additional, unrecited elements or method steps. The term "including" or "includes" may encompass the phrases "comprise," "consist of," or "essentially consist of."

The phrase "consisting of" excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of" limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Also, the description of a group or class of materials as suitable for a given purpose in connection with one or more embodiments implies that the group or class of materials can "comprise," "consist of," and/or "consist essentially of" any member or the entirety of that group or class of materials. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

Carbon dioxide or CO₂ is a primary greenhouse gas accounting for about 80% of all U.S. annual greenhouse gas emissions from human activities. The CO₂ emissions are a well-recognized global problem. Greenhouse gasses are gasses that trap heat in the atmosphere. The heat trapping causes changes in the radiative balance of the Earth that alter climate and weather patterns at global and regional scales. CO₂ is a chemical compound made up of molecules that each have one carbon atom covalently double bonded to two oxygen atoms. CO₂ is found in the gas state at ambient temperature. In the air, CO₂ is transparent to visible light but absorbs infrared radiation, thereby acting as a greenhouse gas. CO₂ enters the atmosphere through burning of fossil fuels such as coal, natural gas, and oil, solid waste, trees and other biological materials. CO₂ further enters the atmosphere as a result of certain chemical reactions such as manufacturing of cement or aluminum. Additionally, when methane enters the atmosphere, it combines with oxygen to form CO₂.

Because of its negative impact on the global climate, efforts have been made to reduce CO₂ emissions, mostly by capture of CO₂ at the source of release such as from smokestacks of power plants, cement plants, or aluminum plants. Yet, much of the man-made CO₂ emissions cannot be captured at the source such as those originating from cars or airplanes. Additionally, capture of the already released CO₂, so called legacy CO₂, is highly desirable to reduce the overall climate impact of the CO₂ greenhouse gas.

Hence, the extraction of CO₂ from ambient air is a potential route for the mitigation of greenhouse gas emissions and associated climate change. The direct extraction of CO₂ from air via a sorbent, typically termed direct air capture (DAC), is the gold-standard technology for this objective.

A typical sorbent technology in DAC includes a porous support material functionalized with amine-containing molecules or polymers. For example, a support material based on porous silica or cellulose may be functionalized with amine-containing molecules or polyethyleneimine (PEI). In this type of sorbent, the amines react spontaneously with CO₂ to separate the CO₂ from the air while the porous support material provides a high surface area for the amine/air interface, ensures thar the air can flow through the sorbent, and anchors the amines in the solid sorbent, preventing their volatilization.

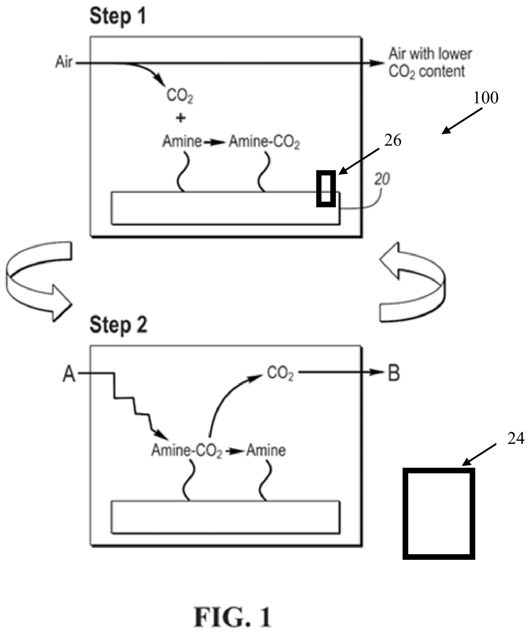

A non-limiting example DAC sorption system/process includes two steps, shown schematically in Fig. 1. As can be seen in Fig. 1, in the first stage or step 1, a sorbent 20 chosen to selectively absorb CO₂ is exposed to air until it reaches a desired saturation point. In the first step of Fig. 1, air is passed over a functionalized sorbent 20, which separates CO₂ from the incoming gas stream, denoted as air. For example, the sorbent may be an amine-functionalized sorbent. In the second stage or step 2, the sorbent is regenerated by stripping the absorbed CO₂ from the sorbent 20 and storing the captured CO₂ at high pressure and purity for later utilization or sequestration, marked as B. In the second step, the CO₂ bound to the solid sorbent 20 is detached using a change in temperature, pressure, humidity level, other stimulus, or their combination, marked as A, regenerating the sorbent to its pristine state and releasing the CO₂ for storage or utilization. The process can then be repeated. In the schematic, the line connecting "amine" to "porous support" denotes that the amines are chemically and/or otherwise bonded to the support.

A state-of-the-art sorbent technology in DAC typically includes a porous support material functionalized with amine-containing molecules or polymers. For example, support material based on porous silica, cellulose, or polystyrene may be functionalized with amine-containing functional groups. Zeolites has also been tested. In this type of sorbent, the amines react spontaneously with CO₂ to separate CO₂ from the air while the porous support material provides a high surface area for the amine/air interface, ensures that the air can flow through the sorbent, and anchors the amines in the solid sorbent, preventing their volatilization.

The sorbent may be in a form of a solid substance such as granules within a reaction reactor. The sorbent may be configured as monolithic structures, mats, plates, sheets, film membranes, or otherwise. However, the traditional configuration of the granular sorbent within a moving bed or combination rector face problems such as abrasion and dust formation as a result of the sorbent's own body weight. An additional issue associated with the state-of-the-art sorbent configurations includes increase of pressure and formation of blockages in the sorbent reactor when the sorbent material swells. Another problem is inefficient exchange of the sorbent, for example when contaminated material needs to be replaced, within the reaction reactor.

Therefore, there is a need to improve a configuration of the sorbent storage within a reaction reactor to overcome the one or more problems outlined above.

In one or more embodiments, a DAC system is disclosed. The DAC system may include a low temperature DAC (LT-DAC). The low temperature may be up to about 120°C. The DAC system may include concentrated sources of CO₂ such as flue gas or biogas. A concentrated source may be a source containing between about 0.1 and 20% CO₂. The DAC system may include dilute sources of CO₂ such as ambient air. A dilute source may be a source containing between about 0.01 and 0.1 % of CO₂.

The system described herein may utilize chemisorption, such as a sorbent having a functional group having an affinity for CO₂, physisorption, or their combination. The system may thus utilize a combination of chemisorbents, physisorbents, or their combination.

A non-limiting example of a DAC system 100 is shown in Fig. 1. While Fig. 1 depicts an amine-functionalized sorbent, the sorbent functionality may be different and include non-aminated sorbents. The amine-functionalization of the sorbent depicted in Fig. 1 is for illustration purposes only.

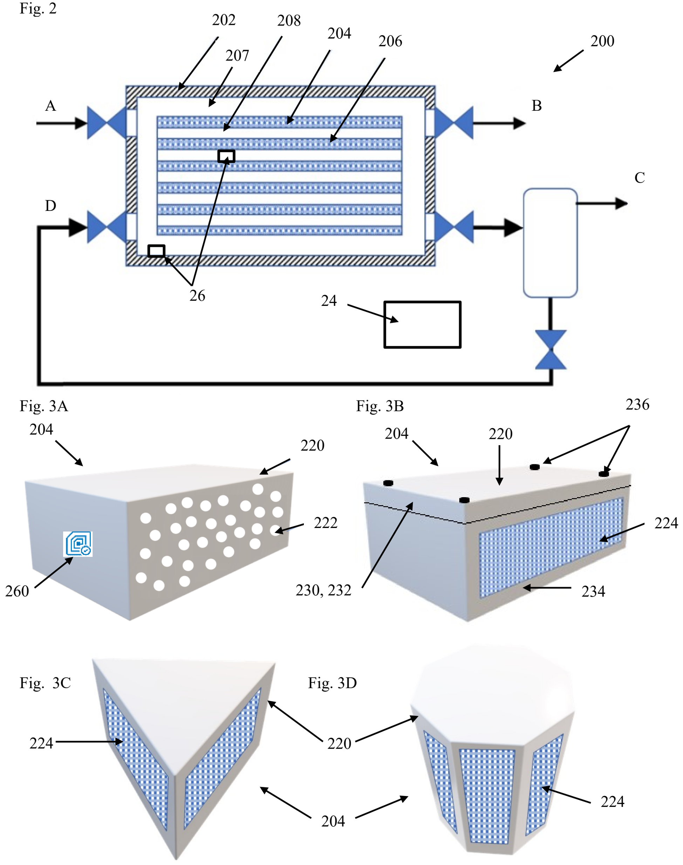

Another non-limiting schematic example of a DAC system 200 is shown in Fig. 2. In Fig. 2, a non-limiting example reaction reactor 202 includes a contact chamber 207 including a plurality of sorbent bodies or housing units 204, each housing unit including one or more sorbents 206. The reaction reactor 202 may also include air gaps 208 or a space free of the sorbent bodies 204. In Fig. 2, an air inlet is schematically depicted at A, and air outlet at B, removal of CO₂ and its conversion into a product is shown at C, and CO₂ recirculation is shown at D.

The DAC system may include a reaction reactor. A non-limiting example reactor is shown in Fig. 2. The reactor may be an adsorption reactor, desorption reactor, or their combination. The adsorption reactor may be a pure adsorption reactor. The desorption reactor may be a pure desorption reactor. The reactor may be a combined adsorption-desorption reactor or a reactor with alternating adsorption and desorption. The system may include a plurality of reactors such as a moving bed, where the sorbent is moved between separate adsorption and desorption reactors. The reaction reactor may include a fixed bed, where adsorption and desorption take place in the same reactor in which the sorbent bodies are accommodated. The reaction reactors may include a moving bed in which the sorbent bodies are spaced within two separate reactors for adsorption and desorption. The reaction reactor may include a chamber defined by a wall. The reaction reactor may include one or more contact chambers, where the CO₂ is temporarily stored in an adsorption material and subsequently released for subsequent processing, transport, or storage. The reactor chamber may be fillable with one or more sorbent bodies.

The system may be continuously operating system. Alternatively, the system may operate in cycles.

The reaction reactor, the contact chamber, or both, may have a variety of shapes, sizes, and configurations. For example, the reaction reactor may be an enclosed or enclosable container with one or more air inlets and air outlets. The air inlet(s) and air outlet(s) may be located in the wall defining the container or chamber. A reaction reactor may include one or more contact chambers, each including one or more sorbent bodies. Each contact chamber may have the same or different type of sorbent bodies, configuration of sorbent bodies, quantity of sorbent bodies, age of sorbent bodies, the like, or their combination.

The reaction reactor, the contact chamber, or both may include one or more units housing the sorbent also called housing units or sorbent bodies. As such, the herein-disclosed reactor is not filled with the sorbent directly, but rather, the reactor is filled with units housing the sorbent. The housing units or sorbent bodies are each fillable with sorbent material.

The sorbent may be a solid sorbent having various chemical and physical properties. Non-limiting examples of the sorbent may include fibrous material, zeolite, porous silica, natural polymers such as cellulose, or synthetic polymers such as polystyrene. The sorbent is functionalized such as amine-functionalized.

The sorbent may be in a form of particles such as granules, mats, fibers, capsules, form a monolith, the like, or a combination thereof. The particles may have the same or different dimensions, diameter, weight, porosity, density, coarseness, functionalization, age, or a combination thereof.

The individual sorbent housing units or sorbent bodies may be hollow canisters, compartments, or cells having an internal volume. The internal volume may be fillable or filled with the sorbent. The housing units may have the same or different configuration such as dimensions, wall thickness, diameter, shape, material, or a combination thereof. The individual units may be stackable, alignable, or both within the contact chamber, the reaction reactor, or both.

The housing units may have a circular cross-section, square-cross section, rectangular cross-section, or the like. The housing units may be shaped as one or more cuboids, prisms, polyhedra, ellipsoids, spheres, cylinders, torus, or a combination thereof within the same chamber/reactor. Non-limiting examples of the polyhedra may include a tetrahedron, octahedron, or icosahedron. Non-limiting examples of prisms may include a triangular prism, square prism, pentagonal prism, rectangular prism, hexagonal prism, octagonal prism, or trapezoidal prism. Each housing unit may include one or more sides or faces. The faces of individual housing units may stack, align, or lay flat against a face or another housing unit. At least some of the faces of the housing units may be equilateral such that the housing units have an equilateral shape or having the sides of equal length. Non-limiting examples of the housing units are shown in Figs. 3A-3D, 6A-6C, 7A-7D, and 8F-8I. The housing units may have sharp or rounded edges, uniform or nonuniform wall thicknesses, elements assisting with thermal management, physical features on the outer surfaces assisting with alignment, handling, or stacking, or a combination thereof.

A non-limiting example volume of a housing unit may be about 1 - 100, 10 - 80, or 10 - 60 liters, which may be considered large volume. The volume of the housing units having the large volume may be about 1, 5, 10, 15, 20, 25, 30, 35, 40, 45, 50, 55, 60, 65, 70, 75, 80, 85, 90, 95, or 100 L. In the case of the round-shaped housing units (spheres, toroids, ellipsoids), the volume may be about 0.01 1, 0.1 - 0.9, or 0.3 - 0.8 liters, which may be considered small volume. The volume of the round housing units may be about 0.01, 0.05, 0.1, 0.15, 0.2, 0.25, 0.3, 0.35, 0.4, 0.45, 0.5, 0.55, 0.6, 0.65, 0.7, 0.75, 0.8, 0.85, 0.9, or 1 L.

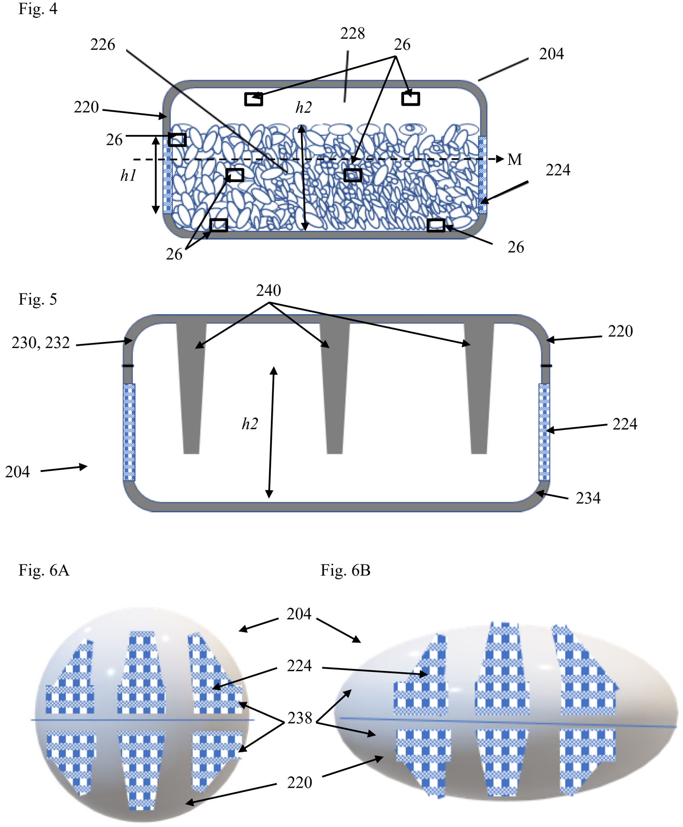

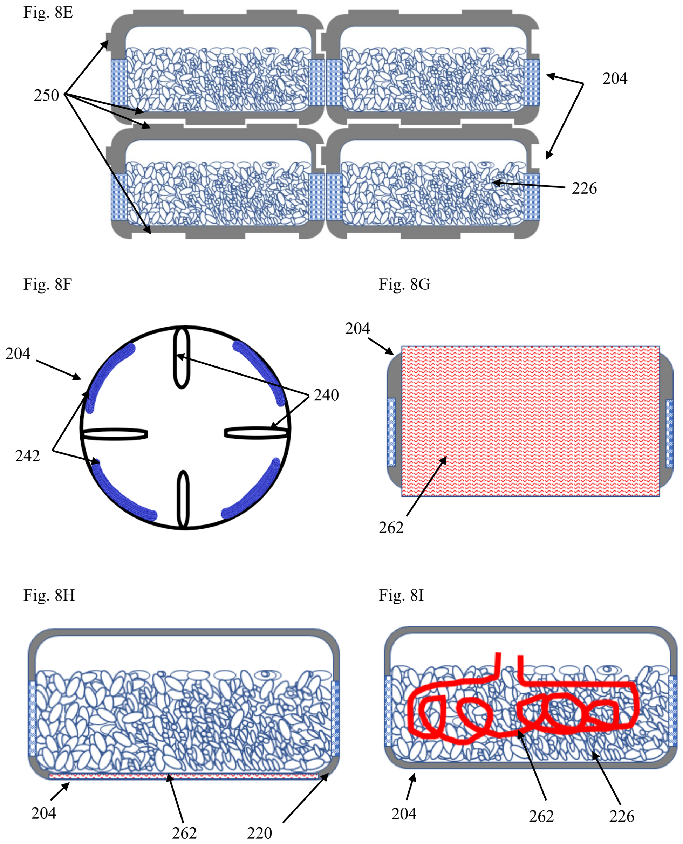

While the large-volume units may be stacked, aligned, and organized within the reactors, the small-volume units may be poured into the chamber or reactor and self-arrange. A combination of the large-volume and small-volume housing units is contemplated. Non-limiting examples of the large-volume housing units are shown in Figs. 3A-3D, and non-limiting examples of the small-volume housing units are shown in Figs. 6A-6C and 8F.

The internal volume of a housing unit may be filled with the sorbent to a predetermined degree. The degree may be about 40-99, 60-95, or 70-85 %, based on a total internal volume of a housing unit. The predetermined degree may be at least about 40, 45, 50, 55, 60, 65, 70, 75, 80, 85, 90, 95, or 99 %, based on a total internal volume of a housing unit. The volume of the sorbent may relate to the volume of the housing unit minus headspace volume.

The housing units or sorbent bodies may be formed from one or more materials such as a first material, a second material, or both. The housing units may thus have a first portion and a second portion, the portions may differ by the material or lack thereof. The first portion may be air-impermeable and the second portion may be air-permeable.

The first material may be a rigid, dimensionally-stable material configured to form a rigid shell. The rigid shell may include a first material which is not air-permeable, gas-permeable, or both. Specifically, the first material may be non-permeable to CO₂, O₂, NOₓ, SOₓ, ozone, CH₄, Ar, water vapor, or their combination. The first material may be a mixture of material named herein. The rigid shell may be formed from a metal such as stainless steel, aluminum, or plastic such as polyethylene, polyamide, epoxy resins, mycelium-based compound, the like, or a combination thereof. The first material may include carbon enrichment such as carbon nanotubes or inclusion of fiber such as fiberglass, or the like. A desirable plastic material for formation of the shells should include a high thermal conductivity such as about or above 0.5 or 1 W/mK. A desirable metal material for formation of the shells should include a high thermal conductivity such as about or above 45 or 50 W/mK. Each shell may have the same or different material. A non-limiting example of the first material, or the rigid shell, is shown as 220 in Figs. 3A-3D, 4, 5, 6A-6C, *etc.*

In a non-limiting example, a contact chamber may include all housing units having the same composition of the first material. In another non-limiting example, a first portion of the housing units may include a first material being metallic and a second portion of the housing units may include a non-metallic first material.

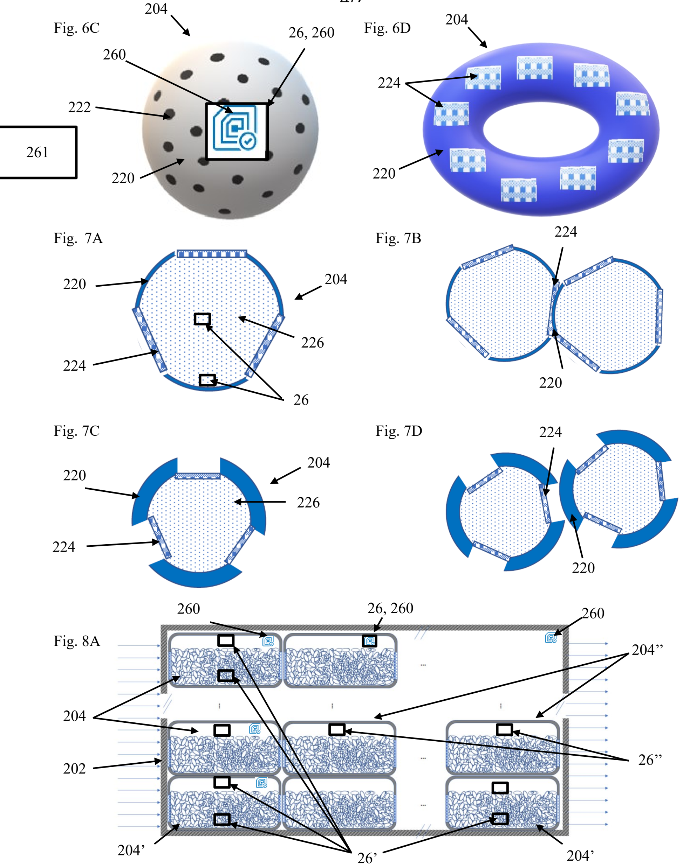

A housing unit may include one or more openings, apertures, or holes. One or more openings may be structured to enable insertion and removal of the sorbent to and from the housing unit. The openings may be thus shaped and sized to be larger than the sorbent particles such that insertion and removal may be realized. If the openings serve the filling, emptying, refilling purpose, the housing may also feature a closure mechanism such as a slide, a lid with optional accompanying hardware enabling movement of the slide or lid. Non-limiting examples of the closure mechanism may include a form-fitting lid, screws, snap closure, seal, gaskets, the like, or a combination thereof. The location of the one or more openings may be varied. For example, the housing may include a number of openings in the corners, bottom portion, top portion, side, or a combination thereof. A non-limiting example of a closure mechanism 230 is shown in Fig. 3B, in which the housing unit is divided into two parts, a lid 232 and an open-top container 234. The lid 232 is secured to the container 234 with hardware such as screws 236. Another non-limiting example of the two-portion container is shown in Fig. 6A, where a spherical housing unit 204 is shown to have two portions or hemispheres 238, which may be brought together to secure the sorbent within the housing. Another non-limiting example is shown as an ellipsoidal housing unit 204 having two hemispheres 238 in Fig. 6B. A yet another example may be a toroidal housing non-limiting example of which is shown in Fig. 6D.

Alternatively, the housing unit may include one or more openings that serve a different purpose of enabling air to pass through the housing and reach the sorbent. The housing may thus include openings which have smaller dimensions than the sorbent particles, thus preventing unwanted egress of the sorbent material from the housing unit. In this case, the housing may include a large plurality of openings. The openings may be spaced regularly, irregularly, concentrated in one or more areas of the housing, included on all sides of the housing, included only on a portion of sides of the housing, or a combination thereof. A non-limiting example of a housing unit with a plurality of openings to allow access of air to the sorbent particles housed inside the housing unit is shown in Figs. 3A and 6C. As can be seen in Fig. 3A, a side of the housing unit includes a number of openings 222 via which air can flow inside the housing unit 204 to contact the sorbent (not depicted). The opposite side of the housing unit 204 may also include the openings 222. Alternatively, a combination of openings 222 and second material 234 may be used within the same housing unit. In Fig. 6C, a plurality of openings 222 is distributed around the entire area of the spherical housing unit 204.

Alternatively or in addition, the housing units may each include one or more portions of a second material, which is an air-permeable material, gas-permeable material, or both. The second material may be configured as a gas-permeable material permeable only to some of the gases. The second material may be selectively permeable or semi-permeable. The second material may purposefully limit ingress of one or more gases to the sorbent. The second material may be thus used to limit ageing of the sorbent. Specifically, the second material may be permeable to CO₂, O₂, NOₓ, SOₓ, ozone, CH₄, Ar, water vapor, or their combination. The second material may be impermeable to one or more of O₂, NOₓ, SOₓ, ozone, CH₄, Ar, water vapor while permeable to one or more of CO₂, O₂, NOₓ, SOₓ, ozone, CH₄, Ar, water vapor.

The second material may be a micro-porous material including a fabric, textile, fleece, mesh, wire mesh, sintered material, polymer foam, perforated sheet, perforated carbon-based material, paper, polymeric materials such as polyurethane, polyethylene, polypropylene, silicone, nonwoven material, the like, or a combination thereof. The second material may form a film, screen, or membrane within one or more portions of the rigid shell (first material). The second material may be firmly, flexibly, removably, or non-removably incorporated in the first material of the housing.

A non-limiting example of the second material is shown in Figs. 3B-3D, 6A, and 6B. As can be seen, the second material 224 is in contact with the first material 220. The second material 224 may form a screen which is permeable to air and which allows air to flow inside the housing unit to contact the sorbent (not depicted).

The second material may be included in 1, 2, 3, 4, 5, 6, 7, 8, or all sides of the housing unit. In a non-limiting example, the housing unit may include 1 or 2 sides having the second material, such as in a non-limiting example of Fig. 3B. Alternatively, the second material may be included on all sides except the top and bottom portions, such as in the non-limiting examples of Figs. 3C and 3D. Hence, at least one, two, or some of the sides of the housing unit may be free of the second material. In some embodiments, the entire area or surface of the housing unit may include portions having the second material, as is shown in Figs. 6A and 6B. A predetermined stacking arrangement may suggest the ideal amount and placement of the second material to maximize air flow through the housing unit.

In one or more embodiments, the ratio of the first material (air impermeable) to the second material (air permeable), based on an entire surface area of the housing unit may be about 1:1, 1:2, 1:3, 1:4, 1:5, 1:6, 1:7, 1:8, or greater. The ratio of air impermeable material to the air permeable material may be about 10:1, 9:1, 8:1, 7:1, 6:1, 5:1, 4:1, 3:1, or 2:1.

In one or more embodiments, the system may include at least one controller and one or more sensors. The controller may include a central processing unit and optionally additional controllers connected to the central processing unit. The one or more controllers may include one or more processing components such as microprocessor units which enable the controllers to process input data.

The controllers may receive input from one or more sensors, accept initial or additional input from sources other than the sensors such as a computer system, process input, generate output, or a combination thereof. The input data may be supplied prior to the DAC system operation, during the operation, or both. The controllers may include a detect function which includes collecting input or data from one or more sensors. The collection of data may be real time collection.

The controller may control additional components of the system, reactor, chamber, housing units, or their combination. For example, the controller may be programmed to detect one or more conditions within each of the sorbent housing units. For example, the controller may control heaters such that a heater may be heated using pulse with modulation. A heater may be connected to a controller via a relay or an optocoupler. Non-limiting example control units are shown in Fig. 1 and Fig. 2 as 24.

The sensors may be located in the reactor, chamber, sorbent housing units, or their combination. The sensors may be included as a module which includes an electrical circuit board and one or more sensors. The sensors or modules may be electrically independent. Alternatively, one sensor module may serve as a master unit and other sensors or sensor modules may be electrically connected to the master unit. In one or more embodiments, the master unit may include electrical components for control and signal acquisition and the other sensors or sensor modules may include an analog sensor wired to the master unit.

A non-limiting example of sensor modules may include MEMS sensors including Surface Mounted Device (SMD) technology. The individual sensors or sensor modules may be thus in a millimeter scale. Other types of sensors may be included, for example lambda sensors, electrochemical sensors, optical sensors, the like, or their combination.

The sensors or sensor modules may communicate with one or more components of the system such as one or more controllers, a remote storage location such as a cloud, or both. The communication may be transmitted wirelessly, for example via WiFi, Bluetooth, or a mobile network. The collected data from the sensor may be also transmitted to a remote storage location and retrieved from there by a control unit.

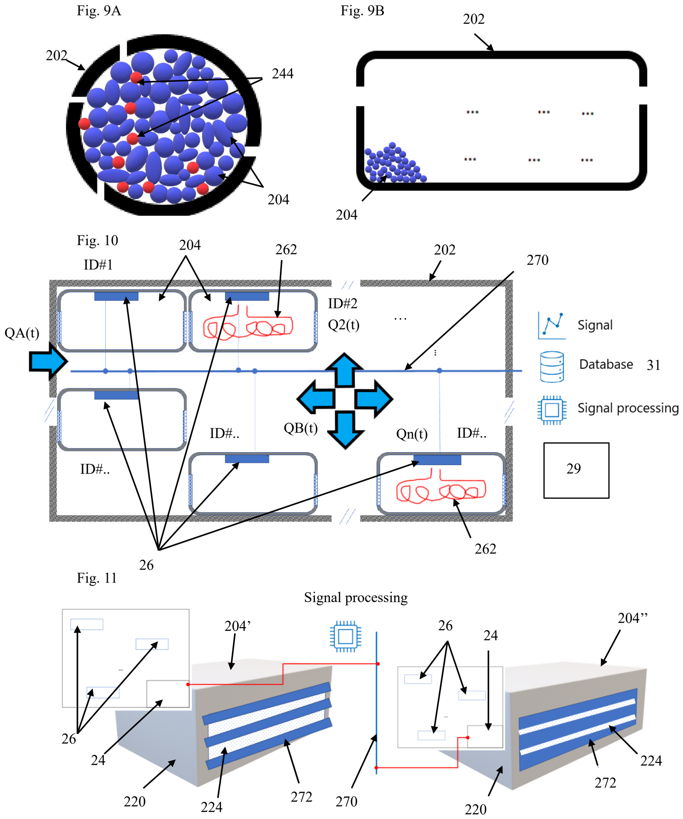

The system may include one or more components making the signal from the sensors accessible such as analog-digital converters. The system may include a bus system such as I2C or SPI. The sensors or sensor modules may communicate with the one or more controllers via the bus system. A bus system is a digital pathway that allows data to be transferred between components of a network. The bus system may include a number of hardware components such as wires, optical fibers, and software such as protocols. A non-limiting example bus system is shown in Fig. 10.

In Fig. 10, a single line depicts the bus system, but multiple lines are contemplated, for example an address bus or a data bus, where a two-line system also requires a common ground. In Fig. 10, a reactor 202 may include a number of sorbent housing units 204, each unit having a sensor module 26. Each individual sorbent housing unit 204 may be requested to communicate via the address bus 270 based on an ID and transmit data in digital coding via the data bus. The data collected by a central processing unit 29 can, for example, be displayed as a time series on a dashboard. The data may also be stored in a database 31.

In a non-limiting example of Fig. 10, the one or more sensor modules may communicate measured variables or characteristics including temperature to a controller. The controller may determine which of the housing units deviate from a target temperature value such as fall below the target temperature value. In the non-limiting example of Fig. 10, an amount of external heat is supplied to the entire reactor and all housing units at the point QA(t), for example by air supply of hot media or using heating elements disclosed herein. Alternatively or in addition, the common source of heat may be located within the reactor between the housing units, for example at the point QB(t). A command may be sent to the affected housing unit via the bus system to activate a heater 262 within the affected housing unit 204. The command may be "heater on" and the housing unit ID. The command may be more extensive such as heating output on a scale of 0-100% of a maximum value; specification of a time interval when the heater should be switched off again, *etc.*

The controller may additionally evaluate trends over a period of time. For example, repeated deviations in temperature or reduced CO₂ release may be subject to a trend over a few days or weeks, leading to a corrective action specific to the affected housing units.

Data transmission may be realized by one or more ways. Data may be transmitted wirelessly or via wires. For example, a set of housing units within a reactor may communicate via a bus system with cables. For example, in a housing unit or reactor including one or more heating elements, data transmission from sensors may be facilitated via one or more cables or wires. In another example, square-shaped or rectangular-shaped housing unit may include cables or wires for data transmission. Likewise, housing units in a fixed bed may include wires or cables for data transmission. Alternatively, a fixed bed, square or rectangular-shaped housing units, and heating elements may be combined with wireless data transmission.

A housing unit without one or more hearing elements may transmit data wirelessly. In another example, round-shaped housing units may transmit data wirelessly. Likewise, housing units in a moving bed may include wireless data transmission. Alternatively, round-shaped housing units, a moving bed, and lack of heaters may be combined with wires, cables, bus system, or their combination.

Measured variables or characteristics from each housing unit, chamber, or reactor for all sensors in all sensor modules may be transmitted as a time series, for example once every predetermined time interval. The time interval may be several seconds, minute, hours, days. The data may be raw, unprocessed data at the point of transmission. The input data may include real time data. At set interval, the controller may compare the signal to a predetermined threshold for a measured variable or characteristic.

Alternatively, the data may be pre-processed in the sensor modules before being provided to the database, the controller, or both. Hence, instead of the directly measured variables or characteristics, only evaluated measured variables may be transmitted. In a non-limiting example, "OK" / "not OK," may be transmitted based on stored threshold values for a sensor's measured variable or characteristic. The transmission can also take place in a grid.

Also based on stored threshold values, a measured value can only be transmitted occasionally (*e.g.* hourly) (*e.g.* "the critical temperature of 100°C was exceeded for 10 minutes" or "the minimum temperature of 60°C was not reached").

The measured variables or characteristics information may be first categorized and subsequently transmitted. For example, transmission may be provided as an error code with a specific code number.

Based on the received raw or pre-processed data, the controllers may evaluate the system components, system operation, take an action, alter operation, dynamically alter one or more properties of the system in operation such as the amount of incoming air, temperature within the reactor, temperature within a unit, *etc.*

The housing units may include one or more sources of voltage for the sensors, sensor modules, heaters, or both. The housing units may include a power supply such as a battery, an external power supply. For example, an external electrical supply may be facilitated by two or just one line, for example if only low voltages are used and metallic housing units are at a first electrical potential (ground), and one end of a heater is connected to this ground.

The power supplies may provide different voltage to different components. Different sensor modules may require different voltages. For example, a master sensor module with digitally controllable sensors may require a first voltage while an external sensor module with an analog sensor may require a higher electrical voltage than the first voltage.

Placement of the sensors or sensor modules may be determined based on what inputs are to be collected, type of a sensor, cost of the sensor, the like, or their combination. For example, a first type of sensor or sensor module may be included in an internal volume of a sorbent housing unit while a second type of a sensor or sensor module may be included on an external surface of a sorbent housing unit. In another example, a plurality of sensors of different types or a sensor module may be included in the system, reactor, chamber, or sorbent housing units. For example, a single housing unit may include one or more sensors or sensor modules within a bulk of the sorbent particles, in a central portion of the bulk sorbent particles, at the bottom of the housing unit, in a headspace above the bulk sorbent particles, adjacent the first material, adjacent the second material, of their combination. Placement of the individual housing units may be registered after installation and recorded in the database disclosed herein. In a bed of the housing units, a position of an individual housing unit may be determined within the bed via a sensor, for example using an acceleration sensor.

Non-limiting example sensors or sensor modules and their placement are shown in Figs. 1, 2, 4, 7A, 7C, and 8A as 26. In a non-limiting example of Fig. 4, the housing unit 204 may include one or more types of sensors or sensor units 26 distributed throughout its internal volume. For example, the sensors or sensor modules may help monitor a spatial course of a measured variable or characteristic such as whether a temperature of the sorbent at the edge of the housing unit deviates from a temperature in a central portion of the housing unit.

In another example of Fig. 8A, a first portion of housing units 204' may include a sensor module 26' having a greater number and/or different type of sensors than sensor units 26" of a second portion of housing units 204". For example, the first portion may include corner housing units 204' located in corners of a chamber or reactor 202. The second portion may include housing units 204" in a central section of the chamber or reactor 202.

The sensors or sensor modules may include sensors collecting input for one or more variables or characteristics. The variables or characteristics may include temperature, absolute pressure, differential pressure, mass flow, humidity, optical sensors such as optical measuring cells for CO₂ content, electrochemical sensors such as sensors measuring CO₂ concentration in the sorbent, CO₂ concentration in the air, CO₂ concentration in the air at entry, CO₂ concentration in the air at egress, O₂ concentration in the air, ammonia concentration, presence of compounds interfering with CO₂ sorption or desorption such as presence of trace gases (SOₓ, NOₓ) with chemically reactive effects on the chemical receptors (amines), chamber wall material, reactor wall material, of their combination, state of the sorbent receptors, functionalization disruptions, or their combination.

The collected inputs may be provided to a controller. The providing may be once, more than once, several times, periodically, or a combination thereof. The controller may collect input, process the input, and generate output. In a non-liming example, the processing may include comparing the input values to targets values. The generated output may include adjusting the process parameters such as adjusting the speed or volume of air flow, adjusting external or internal temperature and/or pressure within the reactor or individual sorbent housing units, or the like.

The controller may be programmed to calibrate, analyze, evaluate, maintain, and/or alter operation of the system. The controller may be programmed to temporarily stop the system operation to replace a housing unit which indicated an exceeded value, for example with respect to sorbent aging. The operation may be stopped, and the housing unit replaced, in a preset timeframe during which all housing units with indicated exceeded permissible aging limits may be replaced. Alternatively, the controller may be programmed to stop the operation immediately after an indication of exceeded permissible aging or a measured variable or characteristic. Alternatively still, the controller may be programmed to stop operation of the specific housing unit while the remainder of the system keeps operating.

The controller may be programmed to identify aging trends and adjust operation to stop, minimize, or slow down undesirable aging of the sorbent. For example, the controller may be programmed to adjust temperature, CO₂ partial pressure, or humidity within the reactor or within a specific sorbent housing unit. The controller may be programmed to identify aging conditions and associated trends before a permissible aging limit is exceeded.

Hence, the characteristic which may accelerate sorbent aging such as temperature, humidity, oxygen content, concentration of an aging by-product such as ammonia, *etc.* may be detected, monitored, evaluated, addressed, controlled, remedied, or a combination thereof. As a result, the reactor may maintain high efficiency, replacement of components may be economical and performed based on specific need.

Aging functions that determine whether a sorbent body can continue to be used or whether it should be replaced may be preset. A criterion for exceeding a permissible aging limit may be, for example, that a body has been exposed to a maximum temperature Tₘₐₓ and that this condition has been accumulated over a time interval Δtₘₐₓ. Other aging functions that contain the time progressions of various measured variables or characteristics and are not yet known may be stored.

Additionally, the generated output may be targeted to a certain location and thus be spatially limited to an area which needs a change as opposed to the entire system or reactor, which may contribute to low operating costs (OPEX) during the lifetime of the system.

In a non-limiting example, if a sensor indicates a temperature value outside of a predetermined range of acceptable temperature values within a housing unit, the processor may coordinate a temperature change in the specific housing units without altering the temperature in additional housing units, the chamber, the reactor, or their combination.

An additional advantage lies in the fact that the replacement of parts may be facilitated based on the collected data from the sensors. As a result, only parts which need replacement are identified for replacement, and working parts remain within the system for an extended period of time. Instead of preset arbitrary interval for part replacement, factual data determines the need and thus timing of the replacement. This contributes to operational efficiency, cost efficiency, and sustainability of the herein-disclosed system.

One or more components of the system may include one or more transponders. A transponder is a device that, upon receiving a signal, emits a different signal in response. A transponder may have a microchip and an antenna, a sensor, may receive input and generate output, or a combination thereof. The transponders may include a Radio Frequency Identification (RFID) tag. The system may include a compatible RFID reader. An RFID tag includes a microchip and antenna attached to a substrate. RFID tags thus use radio frequencies to transmit data. RFID tags contain digitally encoded data readable by the RFID reader which emits radio frequency signal that powers the tag's antenna.

The transponder may use low-frequency, high-frequency, and ultra-high frequency. The transponder may be battery operated such as battery-operated RFID (active) tags or passive tags (use electromagnetic energy from the RFID reader). The transponder may include a code such as an RFID code or an encoded number usable to identify a component of the herein-disclosed system. The system component may include a reactor, a chamber, a sorbent housing unit, a heater, a shutter, a heating/cooling device, *etc.*

A transponder may be used in a combination with a sensor. The sensor may form a portion of the transponder such as RFID tag. Alternatively, a sensor may be spatially removed from the RFID tag. Hence, the sensors disclosed herein and shown in the Figures may be incorporated within an RFID tag or be separate entities from the RFID tags. The sensor may be configured to detect one or more characteristics in the system, reaction reactor, or both.

The RFID-tagged component may be a reactor, chamber, sorbent housing unit, slats, heater, or another component of the herein-disclosed system. Non-limiting examples of components with an RFID tag 260 are shown in Figs. 3A, 6C, and 8A. The RFID tag may be used in a component which has a sensor module or in a component without a sensor module.

The RIFD tag may be included on an internal or external surface of a component. For example, an RFID tag may be placed on an external surface of a housing unit. Alternatively, an RFID tag may be placed on an internal surface of a housing unit, for example a lid. The RFID tag's location should be such that the tag may be readable with the RFID reader.

In a non-limiting example, a spherical sorbent housing unit, such as one shown in Fig. 6C may be used as bulk material in a reactor. During operation, a sensor 26 physically embedded within the RFID tag 260 may collect one or more measured variables or characteristics which may be transmitted to an RFID reader 261. When the housing units are collected, the sensor data may be evaluated. This system may utilize transmission of the collected data from one or more sensors to a controller. When the reactor is removed, filled, or refilled, such as in a moving bed reactor, a data set based on the sensor data may be transmitted via the RFID tags and reader.

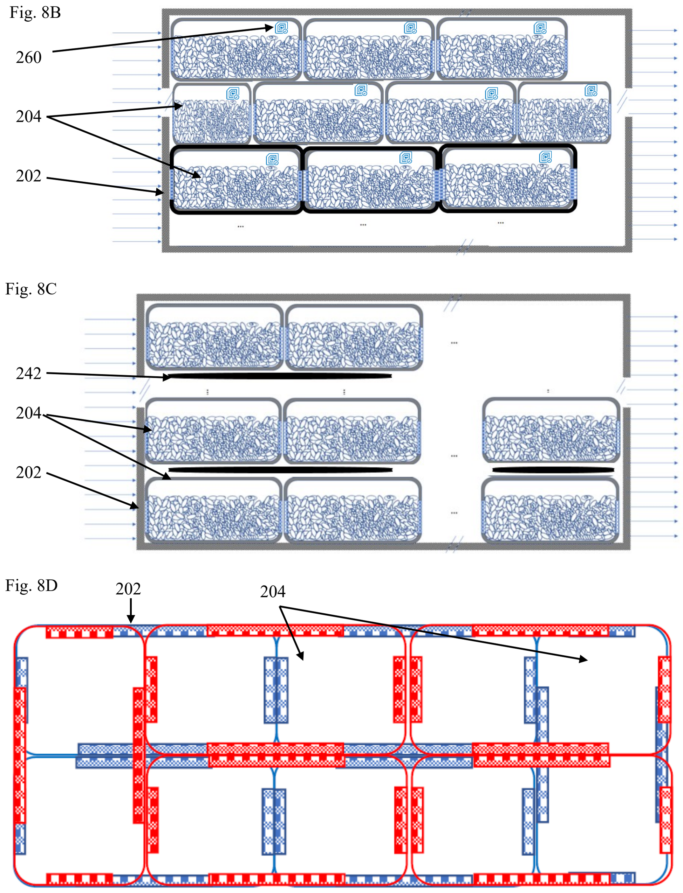

Each type of a component of the system may have a unique RFID code assigned to it. In a non-limiting example of Fig. 8B, each sorbent housing unit 204 has a RFID tag 260. The RFID codes may be collected in a database. The database may be updated when the reactor is filled with the housing units, when a housing unit is removed, when a housing unit is replaced. The database may include additional information besides the RFID code, for example a time of unit installation, removal from the reactor, at what points in time was the system operated or the operating hours, or a combination thereof. The operating hours are especially relevant if the system includes a moving bed reactor since the adsorption and desorption are spatially separated. The database may be an input for the one or more controllers.

The database may also include additional information such as weather data, trace gases in the air, operating parameters of the system such as temporal temperature profiles. Additionally, the aging profiles may be also incorporated in the database. By linking the information to the RFID code, a historical temporal progression of external parameters, system parameters, or both may be determined for each housing unit, chamber, reactor, of their combination.

The system may also include a sorting system with an RFID reader and a connection to the database. The system may be used to identify and track specific components which need replacement. For example, when the housing units are moved from one reactor to another, the housing units may be sorted, discarded or removed, or reused. Alternatively, a housing unit may be refilled with new sorbent material and data associated with it may be reset or updated.

Another non-limiting example of the housing unit 204 is shown in Fig. 4. Fig. 4 is a longitudinal cross-section through a housing unit or sorbent body 204. The housing unit 204 includes a plurality of sorbent particles 226. As can be seen, a free space 226 or volume free of the sorbent particles is deliberately included in the housing unit 204. The free space or headspace 228 is included to compensate for possible swelling or expansion of the sorbent material 226. The expansion may happen, for example, due to influx of moisture in the incoming air. The headspace 228 may be defined by a free volume between the top surface of the sorbent material and inner surface of the first material.

Yet, the headspace in combination with heat supply/dissipation via the housing walls may lead to non-ideal thermal connection of the sorbent to the top of the housing. Hence, thermally conductive rods or other thermally or electrically conductive devices, such as those enabling radiation to be coupled in the system, may be placed or mounted on the top portion of the container such as the lid. A non-limiting example of the thermally conductive devices is shown in Fig. 5. In Fig. 5, a unit housing 204 includes a container 234 enclosable with a lid 232. The lid features a number of conductive devices 240 suspended from the inner surface of the lid 232 towards a bottom of the container 234. Once filled, the housing 204 includes sorbent particles reaching at least a height *h2* indicated in Fig. 5. The conductive devices 240 will be in contact with at least some of the sorbent particles.

As can be also seen in Fig. 4, the dimensions and location of the second material 224 are tailored with respect to the location of the sorbent material 226 and the headspace 228. The goal is to maximize influx of the air through the sorbent material 226. As such, a height *h*₁ of the second material 224 should be lower than a height *h2* of the accumulated sorbent material 226. The second material 224 may be thus free of contact with the headspace 228. The placement of the second material 224 with respect to the first material 220 may be thus vertically asymmetrical such as centered below a center axis of the housing unit marked M.

The housing units with an overall cuboid or prism shape may typically have a greater capacity of about 1-10 liters. However; for some applications, smaller units may be of interest. The shape of the smaller units, each having a volume of about 100 to 500 ml or 0.1-0.5 liters, may be different from cuboids and prisms. The small housing units may be spherical, ellipsoidal, toroidal, or cuboid, as is shown in non-limiting examples of Figs. 6A-6D. The spherical, ellipsoidal, cuboid, or toroidal housing units may include a plurality of portions having a first material 220 and a plurality of portions having the second material 224, which is permeable to air, openings 222, or both. The units 204 thus feature a number of air access sites 224 via which air may come into contact with the sorbent housed within the units. Alternatively, the second material may be replaced with openings 222, as was discussed above.

The spherical, ellipsoidal, or toroidal housing units may be formed from two separate portions or hemispheres 238, as is shown in Figs 6A and 6B. The hemispheres may be detachable, attachable for example by hardware such as clips, a screw mechanism, gaskets, ridges, or otherwise. This feature may enable easy filling, emptying, and refilling of the housing unit with sorbent particles.

Each housing should feature at least 2 air access sites. Each housing may include 2, 3, 4, 5, 6, 7, 8, 9, or more air access sites formed either as an opening 222 or second material panel 224. In a non-limiting example, a spherical unit may include about 2 to 6 openings or screens of the second material per hemisphere. For example, it is contemplated that spherical, toroidal, and/or ellipsoidal housing units may be provided into a chamber or reactor by pouring, discharging, flooding, or inserting in a relatively large quantity at the same time. Unlike the larger cuboid or prism-shaped housings, which may be stacked, the round-shaped housings (with a circular cross-section) have the advantage of self-stacking within a reactor after being discharged into the open volume of the chamber or reactor.

Since the orientation of each spherical, toroidal, and/or ellipsoidal unit will be random in a volume of the installed units, more than one air-accessible opening or screen of the second material may be beneficial so that the air may flow efficiently through the reactor.

To further increase air flow through the spherical, toroidal, and ellipsoidal sorbent bodies, a wall thickness of the first material may be increased. As a result, the second material or opening may be recessed within the first material such that the second material or openings are not flush with the first material's outer surface. This principle is illustrated in Figs. 7A-7D. As can be seen in Fig. 7A, a generally spherical housing is shown with 3 portions of the first material 220 and 3 portions of the air-permeable second material 224. The wall thickness of the first material is substantially the same as the thickness of the second material. Hence, when the spherical units are provided into a volume of a chamber of reactor, at least some of the second material portions 224 of some sorbent bodies may be blocked by a first material portion 220 of another sorbent body, as is schematically shown in Fig. 7B. The air movement may be thus affected in a negative way and efficiency of the system may be lowered. However, when a wall thickness of the first portion 220 is increased to be greater than a thickness of the second material 224 (or an opening), as is shown in Fig. 7C, the air has access to all second portions 224 (or openings), as is shown in Fig. 7D.

The sorbent housing units may be incorporated, inserted, or provided within the contact chamber, the reaction reactor, or both. The arrangement of the individual sorbent housing units may be regular or irregular within the contact chamber, reaction reactor, or both. The housing units may be arranged in layers, rows, columns, levels, or a combination thereof. The arrangement may be regular or irregular. The individual units may be arranged to maximize the amount of sorbent, housing units, or both within the volume a chamber, reactor, or both.

In a non-limiting example, a reactor 202 includes a number of housing units 204, as is shown in Fig. 8A. The units 204 are stacked to maximize volume of the reactor 202 with minimal volume of the reactor 202 being unit-free. Specifically, Fig. 8A shows a reactor with a rectangular cross section having a number of housing units 204 arranged in layers, in contact with one another.

Alternatively, the individual units may be arranged in other ways, for example to provide enhanced stability. A non-limiting example of such arrangement may include a displacement of half an element in the longitudinal direction or in the direction transverse to the drawing plane similar to placement of bricks in masonry. This arrangement is shown in Fig. 8B. This arrangement may feature more than one size of the reactors to ensure that full volume/capacity of the reactor is utilized for placement of the housing units.

In one or more embodiments, the housing units may be oriented or rotated, for example by 90° to achieve an offset between rows and/or level of housing units. The degree of rotation may be 0° to 360°, 45° to 275°, or 90° to 180°. If the ratio of length and width of the reactor is an integer, *e.g.* 2:1, a single form of modules may be used to achieve full-surface occupancy of the stack levels as the modules are offset.

Hence, for example, in a first row, majority of the housing units may be oriented horizontally and one unit vertically adjacent to the horizontal ones. In a second row, adjacent to the first row, the arrangement may be the opposite such that one unit is oriented by 90° and neighbors the horizontal units of the first row while horizontal units of the second row neighbor the vertical unit of the first row. A non-limiting example of such arrangement is shown in Fig. 8D. Orientation of the housing units may help achieve full-surface occupancy of the reactor.

The housing units may be secured to one another, to an inner surface of the chamber or reactor, or a combination thereof. The securing may be provided by mechanical devices such as screws, Velcro, hooks, slats, flanges, protrusions, cooperating portions incorporated within outer surface of the units, click fasteners, the like, or a combination thereof. The securing may be permanent or temporary such that the units may be detachable and replaceable. For example, if a number of units have to be replaced, the arrangement may be such that only the target units can be removed and replacement units may be installed in their place without disturbance to the remaining units. A non-limiting example housing units having cooperating parts 250 on their external surfaces are shown in Fig. 8E.

The housing units should have good thermal contact between one another, between the units and the reactor, or both. In the arrangement of Fig. 8B and other arrangements, the housing units may be heated and cooled from the outside by one or more external hear supplies. The housing units may thus share a common heat supply. The heat transport may be provided via thermally conductive walls of the reactor body. Alternatively or in addition, heating and/or cooling for the reactor or chamber may be provided via heating/cooling elements within the chamber, reactor, or both. For example, the heating/cooling elements may be flow through elements and include tubes with a heating/cooling or reactive medium; microwave absorption; solar-assisted heating; an electric heater configured as an adhesive layer, film, level, or the like. A non-limiting example of a heating/cooling element 242 is shown in Fig. 8C.

Alternatively or in addition, the housing units may include their own heating/cooling elements. For example, a housing unit may include a heater. The heater may be also used as a measure of temperature such that a separate temperature sensor may be omitted. The individual heating may, for example, include a short temperature pulse. The individual heating may include reheating to a static target value for a temperature.

For example, one or more external surfaces of the housing units 204 may include a heater 262 in a form of a heating jacket, as is shown in Fig. 8G. Alternatively or in addition, a heater 262 may be included embedded in one or more walls of the housing units 204 such that the heater 262 is embedded in one or more sides of the housing unit. The heater 262 may be incorporated as part of the first material 220, as is shown in Fig. 8H. Alternatively still, a heater 262 may be suspended into the internal volume of a housing unit 204 such that the heater 262 is in direct contact with the sorbent particles 226, as is shown in Fig. 8I.

The heating/cooling elements as well as the conductive devices discussed above may be distributed evenly, regularly, or irregularly within the volume of the housing unit. For example, in case of a spherical, toroidal, or ellipsoidal housing, the heating/cooling may be managed via elements 242 and devices 240 which may be spaced apart along the internal surface of the housing 204, as is shown in a non-limiting example of Fig. 8F.

Alternatively still, in another non-limiting example, the housing units may be spaced apart between targeted air gaps within the chamber. The targeted air gaps may contribute to faster air mixing and increase efficiency of the sorption. Yet, care should be taken to ensure good thermal conductivity despite the air gaps.

The amount of air, speed of air, and air flow resistance may be managed via one or more devices such as slats, plates, lamellas, sheets, or shutters 272 non-limiting example of which is shown in Fig. 11. The slats may be installed adjacent an air flow into the system, reactor, chamber, or housing unit(s). The slats may be motorized. The slats are openable and closeable. The opening or closing may be in a horizonal or vertical direction. The slats may be attached to the external surface of the housing, specifically adjacent to the second air-permeable material. When closed, the slats may cover at least a portion or the entire surface of the second material such that influx of air into a reactor, chamber, or housing unit is prevented.

The position of the slats, and thus air flow, may be controlled via a controller and one or more sensors or sensor modules. The controller may send a command to open the slats to increase, decrease, initiate, or stop air flow to a reactor, chamber, housing unit, for example via the bus system. In the non-limiting example of Fig. 11, a controller 24 sent a command, based on input from a number of sensors 26, to open the slats 272 in a housing unit 204' ID#1 via the bus system 270 in the left part of Fig. 11, and a command to close the slats 272 was sent to a housing unit 204" ID#2 by the controller 24 vi the bus system 270.

Furthermore, dimensions of individual housing units may be adjusted with respect to the placement or arrangement within the chamber or reactor. For example, housing units may have different wall thickness within the reactor or chamber. In a non-limiting example, housing units placed at the bottom of the reactor, and supporting weight of additional housing units placed on top of the bottom housing units, may be equipped with a greater wall thickness than the upper housing units. The greater wall thickness may enable greater structural stability. At the same time, the housing units with greater thickness may need additional heat management elements to manage heating/cooling as greater wall thickness may implicate greater heat capacity.

The individual housing units may be aligned in one or more ways. For example, the alignment may be based on air flow such that the permeable material of a first unit may be in contact with a permeable material of a second unit. In some embodiments, it may be desirable to align air flow access of one housing unit to another. In some embodiments, it may be desirable to keep designated space between at least some housing units. The alignment may also contemplate a physical contact between individual housing units to achieve good thermal conductivity.

The alignment may be determined by the type of sorbent included within the housing units, placement of the housing unit within the reactor or chamber, humidity of the incoming air, and other parameters or characteristics. For example, individual housing units may include sorbents with different water absorption, functionalization, functionalization density, grain size, age, or other properties. In a non-limiting example, if a first sorbent absorbs/adsorps a large amount of water in addition to CO₂ and a second sorbent requires a relatively dry air for the CO₂ adsorption process, the housing units with the first sorbent may be located adjacent the air inlet and housing units with the second sorbent may be located adjacent the outlet of the reactor.

Non-limiting examples of the reactors featuring spherical or ellipsoidal housing units are shown in Figs. 9A and 9B. Fig. 9A shows a reactor with a circular cross-section. The reactor may be, for example, an elongated tube. The reactor is filled with housing units having spherical, toroidal, ellipsoidal, or a combination thereof, shape. The housing units may be just ellipsoidal, just toroidal, or just spherical. Alternatively, the reactor may have a different shape such as rectangular cross-section, as is shown in Fig. 9B. Figs. 9A and 9B also illustrate contemplated versatility of sizes and round shapes of the housing units to achieve maximum exposure of air to the sorbent bodies.

Additionally, since the goal is to have maximum air flow through the sorbent material, and thus the sorbent bodies, and minimal air passing through free volume within the housing units, the variety in sizes and shapes of the housing units may be implemented, as is illustrated in Fig. 9A. Alternatively, a uniform shape and size of the housing units may be used, as is illustrated in Fig. 9B.

Furthermore, spacers may be provided to fill the free volume unoccupied by the housing units within the chamber or reactor. In a non-limiting example, the spacers may be spherical bodies of a smaller size than the housing units such that the spacers fill gaps between the housing units. Non-limiting example spacers 244 are shown in Fig. 9A. Alternatively, the spacers may be made from elastic material (such as foam) which adjusts to the shape of cavities formed by the absence of housing units within the volume of the reactor or chamber. The spacers may thus have irregular, elongated shape based on the distribution of the housing units within the chamber or reactor.

Incorporation of the sorbent particles within the housing units brings several advantages. For example, the herein-disclosed configuration of fillable sorbent bodies which may be inserted in the reactor results in a lower mechanical stress on the sorbent material due to its own weight than direct placement of sorbent in sorbent beds. Abrasion, mechanical crushing, and dust release are thus minimized. Additionally, the reaction reactor may be filled in a more efficient and consistent way, eliminating the need to handle large amounts of parts within the reactor as only the housing units are to be stacked within. A further advantage lies in exchange of the sorbent in case of positional dependency within the reactor - center versus edge of the reactor. A targeted replacement of the sorbent is possible due to the presence of removable individual housing units. As a result, automation may be simplified as the housing units may be standardized with respect to their content, sizing, placement, filing, and replacement.

Furthermore, the housing units may be easily transferable between reaction reactors, adsorption reactors, or desorption reactors. Housing the sorbent within the herein disclosed units also enables keeping track of predefined residence of the sorbent in a reactor as well as an exchange based on first-in-first-out principle. In other words, the housing units may be monitored from the initial insertion and removed from the system at a predetermined time with certainty, which may result in increased efficiency, reliability, and cost advantages for the system in an operating plant.

Another advantage of the herein-disclosed system includes an increased ability of the system to absorb increased volume of the sorbent material due to swelling. There is no transfer of volume change and tension to neighboring sorbent particles within the reactor.

Yet another advantage stems from the ability to customize content of the reactors via the contact chambers and sorbent bodies within the system. For example, sorbent bodies with a sorbent having a higher functionalization density or with stronger CO₂ binding may be used at the outlet side of the reactor due to a lower concentration of CO₂ at the outlet. In the same reactor, sorbent bodies with a lower functionalization density of lower CO₂ binding may be used at the inlet side which has a higher CO₂ concentration. The spatial customization may thus contribute to financial efficiency associated with the herein-disclosed system set up and operation.

Additional advantages associated with specific embodiments may include the suitability of the spherical, ellipsoidal, toroidal sorbent bodies for both the adsorption/desorption reactor as well as a moving bed, where the round-shaped sorbent bodies are movable between the adsorption reactor and the desorption reactor.

Incorporation of the sensors, sensor module, and/or RFID tags also ensures operational and cost efficiency because replacement of sorbent may be targeted based on actual need as opposed to preset arbitrary estimates. Because the sorbent housing units are identifiable via the RFIT tags, and aging may be detected via sensors, any aging component in need of a replacement may be identified, exchanged for a new one, and replaced to keep the system operation effective. This cost and operational advantage associated with the sorbent housing units thus increases the overall efficiency of the DAC system.

The following application is related to U.S. Patent Application Serial No. , filed on __________(RBPA0524PUS), which is incorporated by reference in its entirety herein.

The processes, methods, or algorithms disclosed herein may be deliverable to or implemented by a processing device, sensor, transponder, controller, or computer, which may include any existing programmable electronic control unit or dedicated electronic control unit. Similarly, the processes, methods, or algorithms may be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms may also be implemented in a software executable object. Alternatively, the processes, methods, or algorithms may be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A direct air capture CO₂ system comprising:
a CO₂ extraction reactor having
a chamber defined by a wall;
an air inlet formed in the wall;
an air outlet formed in the wall; and
housing units defining internal volumes, the housing units arranged within the chamber, at least some of the housing units having spherical and/or ellipsoidal shapes, each of the internal volumes at least partially filled with functionalized CO₂ sorbent particles.

2. The system of claim 1, wherein at least some of the housing units include a first air-impermeable material and a second air-permeable material.

3. The system of claim 2, wherein the second air-permeable material forms a membrane.

4. The system of claim 2, wherein a thickness of the second air-permeable material is smaller than a thickness of the first air-impermeable material.

5. The system of claim 1, wherein at least some of the housing units include air-impermeable spacers located between the functionalized CO₂ sorbent particles.

6. The system of claim 5, wherein the spacers have a smaller diameter than the sorbent particles.

7. The system of claim 1, wherein at least some of the housing units include walls forming openings.

8. The system of claim 1, wherein the housing units differ in size.

9. A CO₂ direct air capture sorbent housing unit comprising:
an enclosable cell having a wall defining an internal volume and having a circular cross-section, the enclosable cell including functionalized CO₂ sorbent particles within the internal volume,
the enclosable cell having an air-impermeable portion and an air-permeable portion configured for entry and egress of air.

10. The sorbent housing unit of claim 9, wherein the enclosable cell is a sphere.

11. The sorbent housing unit of claim 9, wherein the internal volume of the enclosable cell is about 0.01-1 liter.

12. The sorbent housing unit of claim 9, wherein the air-impermeable portion includes metal.

13. The sorbent housing unit of claim 9, wherein the air-permeable portion includes a fabric.

14. The sorbent housing unit of claim 9, wherein the air-impermeable portion has a greater thickness than the air-permeable portion.

15. The sorbent housing unit of claim 10, wherein the air-permeable portion includes openings.

16. A direct air capture CO₂ system comprising:
a reaction reactor at least partially filled with replaceable sorbent housing units having spherical and/or ellipsoidal shapes, each housing unit having an internal volume filled with replaceable functionalized CO₂ sorbent particles.

17. The system of claim 16, wherein at least 60 % of a total internal volume of each housing unit is filled with the replaceable functionalized CO₂ sorbent particles.

18. The system of claim 16, wherein at least some of the sorbent housing units include a first air-impermeable material and a second air-permeable material.

19. The system of claim 18, wherein the second air-permeable material forms a membrane.

20. The system of claim 16, wherein the sorbent housing units are in physical contact with one another.
